# EUROPEAN PATENT SPECIFICATION

(11) **EP 3 451 156 B1**
(45) Date of publication and mention of the grant of the patent: **14.04.2021**
(21) Application number: 16899895.3
(22) Date of filing: 04.05.2016
(51) Int. Cl.: G06F 9/30

(54) **APPARATUS AND METHOD FOR EXECUTING VECTOR CIRCULAR SHIFT OPERATION**
VORRICHTUNG UND VERFAHREN ZUR AUSFÜHRUNG EINES KREISFÖRMIGEN VEKTORUMSCHALTVORGANGS
APPAREIL ET PROCÉDÉ DESTINÉS À EXÉCUTER UNE OPÉRATION DE DÉCALAGE CIRCULAIRE VECTORIEL

(30) Priority: 26.04.2016 CN 201610266747
(43) Date of publication of application: 06.03.2019
(73) Proprietor: Cambricon Technologies Corporation Limited, Beijing 100190 (CN)
(72) Inventor: LIU, Daofu, Beijing 100190 (CN); ZHANG, Xiao, Beijing 100190 (CN); LIU, Shaoli, Beijing 100190 (CN); CHEN, Tianshi, Beijing 100190 (CN); CHEN, Yunji, Beijing 100190 (CN)
(74) Representative: AWA Sweden AB
(86) International application number: PCT/CN2016/080961
(87) International publication number: WO 2017/185384

(56) References cited:
- CN-A- 102 495 724
- CN-A- 104 699 458
- CN-A- 104 699 458
- CN-C- 1 142 484
- US-A- 5 922 066
- US-A1- 2011 138 155
- US-A1- 2018 329 868

## Description

### TECHNICAL FIELD

This disclosure relates to the technical field of computers, and more particularly to an apparatus and a method for executing a vector cyclic shift operation.

### BACKGROUND

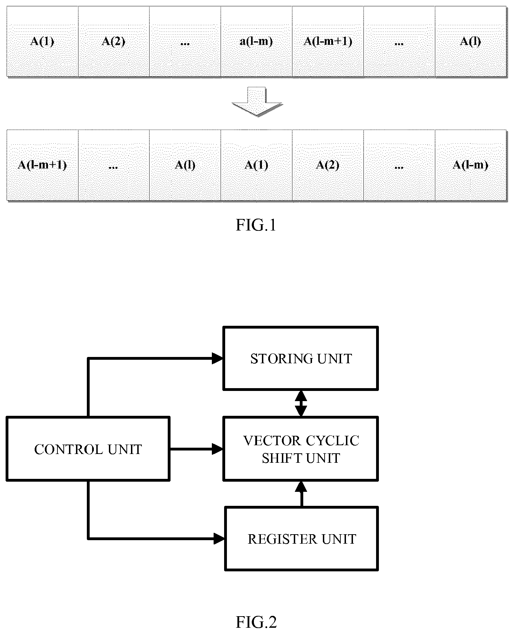

Vector cyclic shift refers to moving each element of a column vector in a certain direction by a certain step size. For elements whose movement range exceed one end of the column vector, the whole vector can be regarded as a ring, such that the elements can be moved to the other end of the column vector. FIG 1 is a schematic diagram illustrating a process of vector cyclic shift. As illustrated in FIG 1, when a vector with a length of *l* is cyclically shifted to the right by a length of *m, l-m* elements at the left side of the vector are moved to the right by the length of *m* and *m* elements at the right side are moved to the left side of the vector.

In the related art, one of the most common solutions for vector cyclic shift is to use a general-purpose processor to shift elements in a column vector one by one. This implementation is extremely inefficient in the case of a large vector size.

In another related art, graphics processing units (GPU) or other devices for image processing are also used to execute vector cyclic shift. These implementations involve communication between different stream processing units and require frequent data moving when performing large-scale vector cyclic shift, and thus do not have a significant advantage.

A prior art example of a device for a vector shift may be found in US 5 922 066 A.

These related methods require more instructions to cooperate with the process of performing large-scale vector cyclic shift, and therefore do not have advantages. A better method can be found in solving such problems.

### SUMMARY

In view of the above, the disclosure provides an apparatus and a method for executing a vector cyclic shift operation, which can support a vector cyclic shift operation of any length and in any step size according to an instruction.

According to a first aspect of the disclosure, an apparatus for executing a vector cyclic shift operation is provided. The apparatus include a storing unit, a register unit, a control unit, and a cyclic shift unit.

The storing unit is configured to store vector data associated with a vector cyclic shift operation instruction.

The register unit is configured to store scalar data associated with the vector cyclic shift operation instruction.

The control unit is configured to decode the vector cyclic shift operation instruction and to control an operation process of the vector cyclic shift operation instruction.

The cyclic shift unit is configured to execute the vector cyclic shift operation on input vector data according to the vector cyclic shift operation instruction decoded.

The cyclic shift unit is implemented in a customized hardware circuit.

In one implementation, the scalar data stored in the register unit include a start address of the input vector data, a storage address of output vector data, and a length of the input vector data associated with the vector cyclic shift operation instruction, where the start address of the input vector data and the storage address of the output vector data are addresses in the storing unit.

The control unit includes an instruction queue module. The instruction queue module is configured to sequentially store the vector cyclic shift operation instruction decoded and to acquire the scalar data associated with the vector cyclic shift operation instruction.

In one implementation, the control unit includes a dependency relationship processing unit. The dependency relationship processing unit is configured to determine whether a current vector cyclic shift operation instruction has a dependency relationship with an operation instruction that has been partially executed, before the cyclic shift unit acquires the current vector cyclic shift operation instruction.

In one implementation, the control unit includes a storage queue module. The storage queue unit is configured to temporarily store a current vector cyclic shift operation instruction when the current vector cyclic shift operation instruction has a dependency relationship with an operation instruction that has been partially executed, and to send the current vector cyclic shift operation instruction stored temporarily to the cyclic shift unit when the dependency relationship is eliminated.

In one implementation, the apparatus further includes an instruction cache unit and an input-output (IO) unit.

The instruction cache unit is configured to store a vector cyclic shift operation instruction to be executed.

The input-output (IO) unit is configured to store in the storing unit the vector data associated with the vector cyclic shift operation instruction or to acquire an operation result of the vector cyclic shift operation instruction from the storing unit.

In one implementation, the vector cyclic shift operation instruction includes an operation code and an operation field.

The operation code is configured to indicate to execute the vector cyclic shift operation.

The operation field comprises at least one of an immediate and a register number and is configured to indicate the scalar data associated with the vector cyclic shift operation, where the register number is configured to point to an address of the register unit.

In one implementation, the storing unit is a scratchpad memory.

According to an example of the disclosure, an apparatus for executing a vector cyclic shift operation is provided. The apparatus includes an instruction fetching module, a decoding module, an instruction queue module, a scalar register file, a dependency relationship processing unit, a storage queue module, a cyclic shift unit, a scratchpad memory, and an input-output (IO) access module.

The instruction fetching module is configured to fetch a next vector cyclic shift operation instruction to be executed from a sequence of instructions and to send the vector cyclic shift operation instruction to the decoding module.

The decoding module is configured to decode the vector cyclic shift operation instruction and to send the vector cyclic shift operation instruction decoded to the instruction queue module.

The instruction queue module is configured to temporarily store the vector cyclic shift operation instruction decoded, to acquire scalar data associated with the vector cyclic shift operation instruction from the vector cyclic shift operation instruction or a scalar register, and to send the vector cyclic shift operation instruction to the dependency relationship processing unit after the scalar data are acquired.

The scalar register file includes multiple scalar registers and is configured to store the scalar data associated with the vector cyclic shift operation instruction.

The dependency relationship processing unit is configured to determine whether the vector cyclic shift operation instruction has a dependency relationship with an operation instruction that has been partially executed, and to send the vector cyclic shift operation instruction to the storage queue module based on a determination that the vector cyclic shift operation instruction has the dependency relationship with the operation instruction that has been partially executed, or to send the vector cyclic shift operation instruction to the cyclic shift unit based on a determination that the vector cyclic shift operation instruction has no dependency relationship with the operation instruction that has been partially executed.

The storage queue module is configured to store the vector cyclic shift operation instruction having the dependency relationship with the operation instruction that has been partially executed and to send the vector cyclic shift operation instruction to the cyclic shift unit after the dependency relationship is eliminated.

The cyclic shift unit is configured to execute the vector cyclic shift operation on input vector data according to the vector cyclic shift operation instruction received.

The scratchpad memory is configured to store the input vector data and output vector data.

The input-output (IO) access module is configured to read out the input vector data from the scratchpad memory and to write the output vector data into the scratchpad memory by directly accessing the scratchpad memory.

In one implementation, the cyclic shift unit is implemented in a customized hardware circuit.

According to a second aspect of the disclosure, a method for executing a vector cyclic shift operation is provided. The method includes the following operations: storing, by a storing unit, vector data associated with a vector cyclic shift operation instruction; storing, by a register unit, scalar data associated with the vector cyclic shift operation instruction; decoding, by a control unit, the vector cyclic shift operation instruction, controlling, by the control unit, an operation process of the vector cyclic shift operation instruction; executing, by a cyclic shift unit implemented in a customized hardware circuit, wherein the scalar data stored in the register unit comprises a start address of the input vector data, a storage address of output vector data, a length of the input vector data and a shift step size associated with the vector cyclic shift operation instruction; wherein the start address of the input vector data and the storage address of the output vector data are addresses in the storing unit.

An instruction fetching module may fetch a next vector cyclic shift operation instruction to be executed from a sequence of instructions and sends the vector cyclic shift operation instruction to a decoding module.

A decoding module may decode the vector cyclic shift operation instruction and sends the vector cyclic shift operation instruction decoded to an instruction queue module.

The instruction queue module may temporarily store the vector cyclic shift operation instruction decoded, acquires scalar data associated with the vector cyclic shift operation instruction from the vector cyclic shift operation instruction or a scalar register, and sends the vector cyclic shift operation instruction to a dependency relationship processing unit after the scalar data are acquired.

A dependency relationship processing unit may determine whether the vector cyclic shift operation instruction has a dependency relationship with an operation instruction that has been partially executed, and sends the vector cyclic shift operation instruction to a storage queue module based on a determination that the vector cyclic shift operation instruction has the dependency relationship with the operation instruction that has been partially executed, or sends the vector cyclic shift operation instruction to a cyclic shift unit based on a determination that the vector cyclic shift operation instruction has no dependency relationship with the operation instruction that has been partially executed.

The storage queue module stores the vector cyclic shift operation instruction having the dependency relationship with the operation instruction that has been partially executed and sends the vector operation instruction to the cyclic shift unit after the dependency relationship is eliminated.

The cyclic shift unit may read out input vector data from a scratchpad memory via an input-output (IO) access module according to the vector cyclic shift operation instruction, executes a cyclic shift operation on the input vector data, and writes a result of the cyclic shift operation into the scratchpad memory via the IO access module.

In one implementation, the storing unit is a scratchpad memory.

In one implementation, the cyclic shift unit is implemented in a customized hardware circuit.

According to the apparatus and the method for executing the vector cyclic shift operation of the disclosure, the whole process of executing the vector cyclic shift operation instruction can be implemented by a customized hardware circuit, that is, the vector cyclic shift operation can be realized by one cyclic shift instruction. The apparatus and the method provided by the disclosure can further flexibly and efficiently support vector data of different sizes during the vector cyclic shift operation, by temporarily storing vector data involved in the vector cyclic shift operation into a scratchpad memory. In addition, the vector cyclic shift operation can be implemented efficiently by using a customized cyclic shift unit, and the instruction adopted by the disclosure is convenient to use.

The disclosure can be applied to the following scenarios (including but not limited to): data processing, robots, computers, printers, scanners, telephones, tablets, smart terminals, mobile phones, driving recorders, navigators, sensors, cameras, cloud servers, cameras, camcorders, projectors, watches, earphones, mobile storages, and wearable devices; aircrafts, ships, cars, and other vehicles; various household appliances such as TVs, air conditioners, microwave ovens, refrigerators, rice cookers, humidifiers, washing machines, electric lights, gas stoves, and range hoods; various types of medical equipments such as nuclear magnetic resonance instruments, B-ultrasound, electrocardiographs, and so on.

### BRIEF DESCRIPTION OF THE DRAWINGS

FIG. 1 is a schematic diagram illustrating a process of vector cyclic shift.

FIG. 2 is a schematic structural diagram illustrating an apparatus for executing a vector cyclic shift operation according to the disclosure.

FIG. 3 is a schematic diagram illustrating a format of a vector cyclic shift operation instruction according to an embodiment of the disclosure.

FIG. 4 is a schematic structural diagram illustrating an apparatus for executing a vector cyclic shift operation according to an embodiment of the disclosure.

FIG. 5 is a flow chart illustrating a process that an apparatus for executing a vector cyclic shift operation instruction executes a vector cyclic shift operation instruction according to an embodiment of the disclosure.

### DETAILED DESCRIPTION

To describe objects, technical solutions, and advantages of the embodiments of the present disclosure more clearly, the present disclosure will be further described in detail hereinafter with reference to the embodiments and in accordance with the accompanying drawings of the disclosure.

An apparatus for executing a vector cyclic shift operation is provided. The apparatus include a storing unit, a register unit, a control unit, and a cyclic shift unit.

The storing unit is configured to store vector data associated with a vector cyclic shift operation instruction. The storing unit may be a scratchpad memory.

The register unit is configured to store scalar data associated with the vector cyclic shift operation instruction. The scalar data includes a start address and a length of input vector data, a storage address of output vector data, a shift step size, and other parameters.

The control unit is configured to decode the vector cyclic shift operation instruction, and to control each unit according to the vector cyclic shift operation instruction decoded, so as to control an operation process of the vector cyclic shift operation instruction.

The cyclic shift unit is configured to execute the vector cyclic shift operation on input vector data according to the vector cyclic shift operation instruction decoded. An address of the input vector data and relevant parameters can be acquired from an immediate of an operation field of the vector cyclic shift operation instruction or from the register unit indicated by a register number of the operation field. The input vector data can be acquired from the storing unit via the address of the input vector data. The cyclic shift unit is configured to execute the vector cyclic shift operation on the input vector data by a certain step size according to an operation code of the vector cyclic shift operation instruction, to obtain a result of the vector cyclic shift operation. The apparatus provided by the disclosure can flexibly and efficiently support data of different sizes during the vector cyclic shift operation, by temporarily storing vector data involved in the vector cyclic shift operation into a scratchpad memory.

According to the disclosure, the cyclic shift unit is a customized hardware circuit, which includes, but is not limited to, a field programmable gate array (FPGA), a coarse grained reconfigurable array (CGRA), an application specific integrated circuit (ASIC), an analog circuit, and a memristor. The vector cyclic shift operation instruction can be executed by a customized hardware circuit and other hardware modules of the apparatus provided by the disclosure. The vector cyclic shift operation can be realized by one vector cyclic shift instruction according to the apparatus provided by the disclosure.

FIG. 2 is a schematic structural diagram illustrating an apparatus for executing a vector cyclic shift operation according to the disclosure. As illustrated in FIG. 2, the apparatus includes a storing unit, a register unit, a control unit, and a cyclic shift unit.

The storing unit is configured to store vector data. In one implementation, the storing unit may be a scratchpad memory that can support vector data of different sizes. In the embodiments of the disclosure, necessary computing data are stored temporarily in the scratchpad memory, such that the apparatus of the disclosure can further flexibly and efficiently support data of the different sizes during the vector cyclic shift operation. The scratchpad memory can be implemented by a variety of different memory devices such as a static random-access memory (SRAM), a dynamic random access memory (DRAM), an enhanced dynamic random access memory (eDRAM), a memristor, 3D-DRAM, and a non-volatile memory.

The register unit is configured to store scalar data. The scalar data includes an address of a vector and other parameters, where the address of the vector is the address of the vector stored in the storing unit. In one implementation, the register unit may be a scalar register file, which is configured to provide a scalar register required in the operation process. The scalar register can store not only the address of the vector, but also other scalar data.

The control unit is configured to control each unit of the apparatus. In one implementation, the control unit is configured to read out the vector cyclic shift operation instruction prepared, to decode the vector cyclic shift operation instruction to generate a control signal, and to send the control signal to other units in the apparatus. The other units are configured to execute corresponding operations according to the control signal.

The cyclic shift unit is configured to execute various vector cyclic shift operations. In one implementation, the cyclic shift unit is configured to obtain a start address of a vector to be shifted, a length of the vector to be shifted, and a step size for a vector cyclic shift operation according to an instruction, to read out the vector, and to execute a vector cyclic shift operation on the vector.

According to an implementation of the disclosure, the apparatus for executing the vector cyclic shift operation further includes an instruction cache unit. The instruction cache unit is configured to store a vector operation instruction to be executed. During execution of an instruction, it is also cached in the instruction cache unit. When execution of one instruction is completed, the instruction will be submitted.

According to an implementation of the disclosure, the control unit of the apparatus includes an instruction queue module. The instruction queue module is configured to sequentially store the vector operation instruction decoded and, to send the vector operation instruction and scalar data to a dependency relationship processing unit after acquiring the scalar data associated with the vector operation instruction.

According to an implementation of the disclosure, the control unit of the apparatus further includes a dependency relationship processing unit. The dependency relationship processing unit is configured to determine whether a current operation instruction has a dependency relationship with an operation instruction that has been partially executed (for example, whether the current operation instruction and the operation instruction that has been partially executed access the same vector storing address), before the cyclic shift unit acquired the current vector cyclic shift operation instruction. The control unit is configured to send the vector cyclic shift operation instruction to a storage queue module based on a determination that the current vector cyclic shift operation instruction has the dependency relationship with the operation instruction that has been partially executed, and send the current vector cyclic shift operation instruction in the storage queue module to the cyclic shift unit when execution of a previous instruction is completed, or to directly send the vector cyclic shift operation instruction to the cyclic shift unit based on a determination that the current vector cyclic shift operation instruction has no dependency relationship with the operation instruction that has been partially executed. In particular, when the current cyclic shift vector operation instruction needs to access the scratchpad memory, a previous vector operation instruction and the current cyclic shift vector operation instruction may access a same storage space. To ensure the correctness of the execution result of the instruction, when detecting that there is the dependency relationship between the current vector operation instruction and data of the previous vector operation instruction, the current vector operation instruction should wait in the storage queue module until the dependency relationship is eliminated.

According to an implementation of the disclosure, the control unit of the apparatus further includes a storage queue module. The storage queue module includes an ordered queue. An operation instruction which has a dependency relationship with data of the previous operation instruction that has been partially executed is stored in the ordered queue until the dependency relationship is eliminated. The storage queue module is configured to send the operation instruction to the cyclic shift unit after the dependency relationship is eliminated.

According to an implementation of the disclosure, the apparatus further includes an input-output (IO) unit. The IO unit is configured to store vector data into the storing unit or to acquire a result of the vector operation from the storing unit. The IO unit can read out vector data from a memory or write output vector data into the memory by directly accessing the storing unit.

According to an implementation of the disclosure, in the instruction design of the apparatus, a vector cyclic shift operation can be completed by using only one instruction.

According to the embodiments of the disclosure, during executing a vector cyclic shift operation, the apparatus fetches the instruction to decode, sends the instruction decoded to the instruction queue module for storing, and acquires parameters in the instruction according to the decoding result, where these parameters can be parameters directly written into the operation field of the instruction or can be parameters directly read out from a specified register according to the register number in the operation field of the instruction. The advantage of using the register to store parameters is that there is no need to change the instruction itself. That is, most loops can be achieved by using the instruction to change the values in the register. It is possible to greatly save the number of instructions required for solving some practical problems. After all operands are obtained, the dependency relationship processing unit determines whether a dependency relationship between data actually needed to be used by the instruction and data of the previous operation instruction exists, which determines whether the instruction can be immediately sent to the cyclic shift unit for executing. For example, once the instruction has the dependency relationship with the data of the previous operation instruction, the instruction will not be sent to the cyclic shift unit for executing until the previous operation instruction that the instruction depends on is completely executed. In the customized cyclic shift unit, the instruction will be executed quickly, and the result, that is a generated random vector, is written back to an address provided by the instruction, indicating that the execution of the instruction is completed.

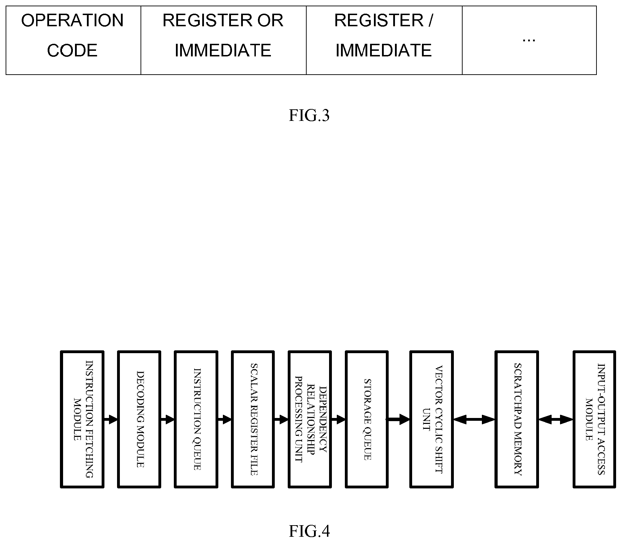

The vector cyclic shift operation instruction executed by the apparatus includes four operation fields, that is, a start address of a vector, a length of the vector, a step size of cyclic shift, and a storing address of an output vector. According to the vector cyclic shift operation instruction, the apparatus can obtain parameters of the vector cyclic shift operation instruction from the vector cyclic shift operation instruction directly or by accessing a register number provided by the vector cyclic shift operation instruction. The cyclic shift unit executes a vector cyclic shift operation on the vector and writes back the result into a specified storing address of a scratchpad memory. A format of a vector cyclic shift operation instruction is illustrated in FIG. 3.

FIG. 4 is a schematic structural diagram illustrating an apparatus for executing a vector cyclic shift operation according to an embodiment of the disclosure. As illustrated in FIG. 4, the apparatus includes an instruction fetching module, a decoding module, an instruction queue module, a scalar register file, a dependency relationship processing unit, a storage queue module, a cyclic shift unit, a scratchpad memory, and an input-output (IO) access module.

The instruction fetching module is configured to fetch a next instruction to be executed from a sequence of instructions and to send the instruction to the decoding module.

The decoding module is configured to decode the instruction and to send the instruction decoded to the instruction queue module.

The instruction queue module is configured to temporarily store the vector cyclic shift instruction decoded, to acquire scalar data associated with the vector cyclic shift instruction from the vector cyclic shift instruction or a scalar register, and to send the vector cyclic shift instruction to the dependency relationship processing unit after the scalar data are acquired.

The scalar register file is configured to provide scalar registers used by the apparatus in the operation. The scalar register file includes multiple scalar registers, configured to store the scalar data associated with the vector cyclic shift instruction.

The dependency relationship processing unit is configured to handle a possible storage dependency relationship between the instruction and a previous instruction. The instruction will access the scratchpad memory, and the previous instruction and the instruction may access a same storage space. The dependency relationship processing unit is configured to detect whether a storage interval of input data of the current instruction and a storage interval of output data of the previous instruction that has been partially executed are overlapped. If the storage interval of the input data of the current instruction and the storage interval of the output data of the previous instruction that has been partially executed are overlapped, it means that the instruction logically needs an execution result of the previous instruction as an input, so the instruction cannot start execution until the previous instruction is completed. In this process, the instruction is actually stored in the storage queue module temporarily. To ensure the correctness of the execution result of the instruction, when detecting that there is a dependency relationship between the current instruction and data of the previous instruction, the current instruction should wait in the storage queue module until the dependency relationship is eliminated.

The storage queue module includes an ordered queue. The instruction which has the dependency relationship with the data of the previous instruction is stored in the ordered queue until the dependency relationship is eliminated.

The cyclic shift unit is configured to execute a vector cyclic shift operation.

The scratchpad memory is a temporary storage apparatus special for vector data and can support vector data of different sizes. The scratchpad memory is configured to store input vector data and output vector data.

The IO access module is configured to read out data from the scratchpad memory or write data into the scratchpad memory by directly accessing the scratchpad memory.

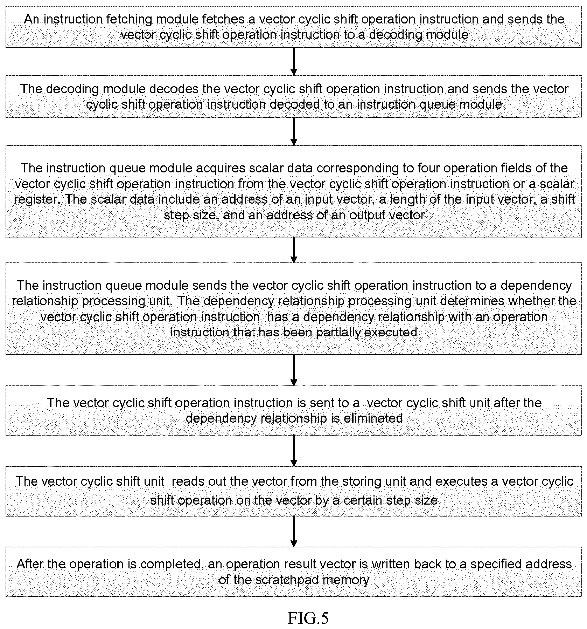

FIG. 5 is a flow chart illustrating a process that an apparatus for executing a vector cyclic shift operation executes a vector cyclic shift operation instruction according to an embodiment of the disclosure. As illustrated in FIG. 5, the process of executing a vector cyclic shift operation instruction includes the following operations.

At S1, an instruction fetching module fetches a vector cyclic shift operation instruction and sends the vector cyclic shift operation instruction to a decoding module.

At S2, the decoding module decodes the vector cyclic shift operation instruction and sends the vector cyclic shift operation instruction decoded to an instruction queue module.

At S3, the instruction queue module acquires scalar data corresponding to four operation fields of the vector cyclic shift operation instruction from the vector cyclic shift operation instruction or a scalar register. The data include an address of an input vector, a length of the input vector, a shift step size, and an address of an output vector.

At S4, after the required scalar data are acquired, the instruction queue module sends the vector cyclic shift operation instruction to a dependency relationship processing unit. The dependency relationship processing unit determines whether a current vector cyclic shift operation instruction has a dependency relationship with an operation instruction that has been partially executed. If the current vector cyclic shift operation instruction has the dependency relationship with the operation instruction that has been partially executed, the current vector operation instruction should wait in the storage queue module until the current vector cyclic shift operation instruction has no dependency relationship with the operation instruction that has been partially executed in data.

At S5, the vector cyclic shift operation instruction is sent to cyclic shift unit after the dependency relationship is eliminated.

At S6, the cyclic shift reads out the vector from the storing unit and executes a vector cyclic shift operation on the vector by a certain step size.

At S7, after the operation is completed, an operation result vector is written back to a specified address of the scratchpad memory.

In summary, the apparatus for executing a vector cyclic shift operation, cooperated with the corresponding instructions, can well solve more and more cyclic shift operations for vectors in the current computer field. Compared with the related solutions, the present disclosure can have the advantages of convenient use, flexible vector length supported, and sufficient on-chip cache.

While the disclosure has been described in connection with certain embodiments, it is to be understood that the disclosure is not to be limited to the disclosed embodiments but, on the contrary, is intended to cover various modifications and equivalent arrangements included within the scope of the appended claims, which scope is to be accorded the broadest interpretation so as to encompass all such modifications and equivalent structures as is permitted under the law.

## Claims

1. An apparatus for executing a vector cyclic shift operation, comprising:
a storing unit, configured to store vector data associated with a vector cyclic shift operation instruction;
a register unit, configured to store scalar data associated with the vector cyclic shift operation instruction;
a control unit, configured to decode the vector cyclic shift operation instruction and to control an operation process of the vector cyclic shift operation instruction; and
a cyclic shift unit, configured to execute the vector cyclic shift operation on input vector data according to the vector cyclic shift operation instruction decoded;
the cyclic shift unit being implemented in a customized hardware circuit; and
the scalar data stored in the register unit comprising a start address of the input vector data, a storage address of output vector data, a length of the input vector data and a shift step size associated with the vector cyclic shift operation instruction; wherein the start address of the input vector data and the storage address of the output vector data are addresses in the storing unit.

2. The apparatus of claim 1, wherein the cyclic shift unit executes the vector cyclic shift operation on the input vector and writes back the result into the storage address of the output vector data in the scalar data associated with the vector cyclic shift operation instruction.

3. The apparatus of claim 1, wherein the control unit comprises:
an instruction queue module, configured to sequentially store the vector cyclic shift operation instruction decoded and to acquire the scalar data associated with the vector cyclic shift operation instruction.

4. The apparatus of claim 1, wherein the control unit comprises:
a dependency relationship processing unit, configured to determine whether a current vector cyclic shift operation instruction has a dependency relationship with an operation instruction that has been partially executed, before the cyclic shift unit acquires the current vector cyclic shift operation instruction.

5. The apparatus of claim 1, wherein the control unit comprises:
a storage queue module, configured to temporarily store a current vector cyclic shift operation instruction when the current vector cyclic shift operation instruction has a dependency relationship with an operation instruction that has been partially executed, and to send the current vector cyclic shift operation instruction stored temporarily to the cyclic shift unit when the dependency relationship is eliminated.

6. The apparatus of any of claim 1 to 5, further comprising:
an instruction cache unit, configured to store a vector cyclic shift operation instruction to be executed; and
an input-output (IO) unit, configured to store in the storing unit the vector data associated with the vector cyclic shift operation instruction or to acquire an operation result of the vector cyclic shift operation instruction from the storing unit.

7. The apparatus of claim 1, wherein the vector cyclic shift operation instruction comprises:
an operation code, configured to indicate to execute the vector cyclic shift operation; and
an operation field, comprising at least one of an immediate and a register number and configured to indicate the scalar data associated with the vector cyclic shift operation instruction;
the register number being configured to point to an address of the register unit.

8. The apparatus of any of claim 1 to 5, and 7, wherein the storing unit is a scratchpad memory.

9. The apparatus of claim 1, wherein apparatus further includes an input-output, 10, unit, wherein the IO unit is configured to store vector data in the storing unit, or to acquire a result of the vector operation from the storing unit, wherein the IO unit reads out vector data from a memory or writes vector data into the memory by directly accessing the storing unit.

10. The apparatus of claim 9, wherein the storing unit is a scratchpad memory.

11. A method for executing a vector cyclic shift operation, the method comprising
storing, by a storing unit, vector data associated with a vector cyclic shift operation instruction;
storing, by a register unit, scalar data associated with the vector cyclic shift operation instruction;
decoding, by a control unit, the vector cyclic shift operation instruction,
controlling, by the control unit, an operation process of the vector cyclic shift operation instruction; and
executing, by a cyclic shift unit implemented in a customized hardware circuit, the vector cyclic shift operation on input vector data according to the vector cyclic shift operation instruction decoded;
wherein the scalar data stored in the register unit comprises a start address of the input vector data, a storage address of output vector data, a length of the input vector data and a shift step size associated with the vector cyclic shift operation instruction; wherein the start address of the input vector data and the storage address of the output vector data are addresses in the storing unit.

12. A method of claim 11, , the method further comprising:
executing, by the cyclic shift unit, the vector cyclic shift operation on the input vector; and
writing back, by the cyclic shift unit, the result into the storage address of output vector data in the scalar data associated with the vector cyclic shift operation instruction.

13. A method of claim any one of claims 11-12, further comprising
sequentially storing, by an instruction queue module, the vector cyclic shift operation instruction decoded; and
acquiring, by the instruction queue module, the scalar data associated with the vector cyclic shift operation instruction.

14. A method of any one of claims 11-13, further comprising:
determining, by a dependency relationship processing unit, whether a current vector cyclic shift operation instruction has a dependency relationship with an operation instruction that has been partially executed, before, acquiring, by the cyclic shift unit, the current vector cyclic shift operation instruction.

15. A method of any one of claims 11-14, further comprising:
storing, by an instruction cache unit, a vector cyclic shift operation instruction to be executed, and
storing, by an input-output (IO) unit, in the storing unit the vector data associated with the vector cyclic shift operation instruction or acquiring, by the IO unit, an operation result of the vector cyclic shift operation instruction from the storing unit.

16. A method of any one of claims 11-14, wherein the vector cyclic shift operation instruction comprises:
an operation code, configured to indicate to execute the vector cyclic shift operation; and
an operation field, comprising at least one of an immediate and a register number and configured to indicate the scalar data associated with the vector cyclic shift operation instruction;
the register number being configured to point to an address of the register unit.

## Patentansprüche

1. Vorrichtung zum Ausführen einer zyklischen Vektorverschiebungsoperation, die Folgendes umfasst:
eine Speichereinheit, die konfiguriert ist, Vektordaten, die einem Befehl für zyklische Vektorverschiebungsoperation zugeordnet sind, zu speichern;
eine Registereinheit, die konfiguriert ist, skalare Daten, die dem Befehl für zyklische Vektorverschiebungsoperation zugeordnet sind, zu speichern;
eine Steuereinheit, die konfiguriert ist, den Befehl für zyklische Vektorverschiebungsoperation zu decodieren und einen Operationsprozess des Befehls für zyklische Vektorverschiebungsoperation zu steuern; und
eine Einheit für zyklische Verschiebung, die konfiguriert ist, die zyklische Vektorverschiebungsoperation an Eingangsvektordaten in Übereinstimmung mit dem decodierten Befehl für zyklische Vektorverschiebungsoperation auszuführen;
wobei die Einheit für zyklische Verschiebung in einer kundenspezifischen Hardware-Schaltung implementiert ist; und
die skalaren Daten, die in der Registereinheit gespeichert sind, eine Startadresse der Eingangsvektordaten, eine Speicheradresse von Ausgangsvektordaten, eine Länge der Eingangsvektordaten und eine Verschiebungsschrittgröße, die dem Befehl für zyklische Vektorverschiebungsoperation zugeordnet sind, enthalten; wobei die Startadresse der Eingangsvektordaten und die Speicheradresse der Ausgangsvektordaten Adressen in der Speichereinheit sind.

2. Vorrichtung nach Anspruch 1, wobei die Einheit für zyklische Verschiebung die zyklische Vektorverschiebungsoperation an dem Eingangsvektor ausführt und das Ergebnis an die Speicheradresse der Ausgangsvektordaten in den skalaren Daten, die dem Befehl für zyklische Vektorverschiebungsoperation zugeordnet sind, zurückschreibt.

3. Vorrichtung nach Anspruch 1, wobei die Steuereinheit Folgendes umfasst:
ein Befehlswarteschlangenmodul, das konfiguriert ist, den decodierten Befehl für zyklische Vektorverschiebungsoperation sequentiell zu speichern und die skalaren Daten, die dem Befehl für zyklische Vektorverschiebungsoperation zugeordnet sind, zu erfassen.

4. Vorrichtung nach Anspruch 1, wobei die Steuereinheit Folgendes umfasst:
eine Abhängigkeitsbeziehungs-Verarbeitungseinheit, die konfiguriert ist, zu bestimmen, ob ein aktueller Befehl für zyklische Vektorverschiebungsoperation eine Abhängigkeitsbeziehung mit einem Operationsbefehl, der teilweise ausgeführt worden ist, besitzt, bevor die Einheit für zyklische Verschiebung den aktuellen Befehl für zyklische Vektorverschiebungsoperation erfasst.

5. Vorrichtung nach Anspruch 1, wobei die Steuereinheit Folgendes umfasst:
ein Speicherwarteschlangenmodul, das konfiguriert ist, einen aktuellen Befehl für zyklische Vektorverschiebungsoperation vorübergehend zu speichern, wenn der aktuelle Befehl für zyklische Vektorverschiebungsoperation eine Abhängigkeitsbeziehung mit einem Operationsbefehl, der teilweise ausgeführt worden ist, besitzt, und den aktuellen Befehl für zyklische Vektorverschiebungsoperation, der vorübergehend in der Einheit für zyklische Verschiebung gespeichert worden ist, zu senden, wenn die Abhängigkeitsbeziehung beseitigt worden ist.

6. Vorrichtung nach einem der Ansprüche 1 bis 5, die ferner Folgendes umfasst:
eine Befehls-Cache-Einheit, die konfiguriert ist, einen auszuführenden Befehl für zyklische Vektorverschiebungsoperation zu speichern; und
eine Eingabe/Ausgabe-Einheit, (E/A-Einheit), die konfiguriert ist, in der Speichereinheit die Vektordaten, die dem Befehl für zyklische Vektorverschiebungsoperation zugeordnet sind, zu speichern oder ein Operationsergebnis des Befehls für zyklische Vektorverschiebungsoperation von der Speichereinheit zu erfassen.

7. Vorrichtung nach Anspruch 1, wobei der Befehl für zyklische Vektorverschiebungsoperation Folgendes enthält:
einen Operationscode, der konfiguriert ist, die Ausführung der zyklischen Vektorverschiebungsoperation anzugeben; und
ein Operationsfeld, das eine direkte und/oder eine Registernummer enthält und konfiguriert ist, die skalaren Daten, die dem Befehl für zyklische Vektorverschiebungsoperation zugeordnet sind, anzugeben;
wobei die Registernummer konfiguriert ist, auf eine Adresse der Registereinheit zu zeigen.

8. Vorrichtung nach einem der Ansprüche 1 bis 5 und 7, wobei die Speichereinheit ein Scratchpad-Speicher ist.

9. Vorrichtung nach Anspruch 1, wobei die Vorrichtung ferner eine Eingabe/Ausgabe-Einheit, E/A-Einheit, enthält, wobei die E/A-Einheit konfiguriert ist, Vektordaten in der Speichereinheit zu speichern oder ein Ergebnis der Vektoroperation von der Speichereinheit zu erfassen, wobei die E/A-Einheit Vektordaten aus einem Speicher ausliest oder Vektordaten in den Speicher schreibt, indem sie direkt auf die Speichereinheit zugreift.

10. Vorrichtung nach Anspruch 9, wobei die Speichereinheit ein Scratchpad-Speicher ist.

11. Verfahren zum Ausführen einer zyklischen Vektorverschiebungsoperation, wobei das Verfahren Folgendes umfasst:
Speichern durch eine Speichereinheit von Vektordaten, die einem Befehl für zyklische Vektorverschiebungsoperation zugeordnet sind;
Speichern durch eine Registereinheit von skalaren Daten, die dem Befehl für zyklische Vektorverschiebungsoperation zugeordnet sind;
Decodieren durch eine Steuereinheit des Befehls für zyklische Vektorverschiebungsoperation,
Steuern durch die Steuereinheit eines Operationsprozesses des Befehls für zyklische Vektorverschiebungsoperation; und
Ausführen durch eine Einheit für zyklische Verschiebung, die in einer kundenspezifischen Hardware-Schaltung implementiert ist, der zyklischen Vektorverschiebungsoperation an Eingangsvektordaten in Übereinstimmung mit dem decodierten Befehl für zyklische Vektorverschiebungsoperation;
wobei die skalaren Daten, die in der Registereinheit gespeichert sind, eine Startadresse der Eingangsvektordaten, eine Speicheradresse von Ausgangsvektordaten, eine Länge der Eingangsvektordaten und eine Verschiebungsschrittgröße, die dem Befehl für zyklische Vektorverschiebungsoperation zugeordnet sind, enthalten; wobei die Startadresse der Eingangsvektordaten und die Speicheradresse der Ausgangsvektordaten Adressen in der Speichereinheit sind.

12. Verfahren nach Anspruch 11, wobei das Verfahren ferner Folgendes umfasst:
Ausführen durch die Einheit für zyklische Verschiebung der zyklischen Vektorverschiebungsoperation an dem Eingangsvektor; und
Zurückschreiben durch die Einheit für zyklische Verschiebung des Ergebnisses an die Speicheradresse von Ausgangsvektordaten in den skalaren Daten, die dem Befehl für zyklische Vektorverschiebungsoperation zugeordnet sind.

13. Verfahren nach einem der Ansprüche 11-12, das ferner Folgendes umfasst:
sequentielles Speichern durch ein Befehlswarteschlangenmodul des decodierten Befehls für zyklische Vektorverschiebungsoperation; und
Erfassen durch das Befehlswarteschlangenmodul der skalaren Daten, die dem Befehl für zyklische Vektorverschiebungsoperation zugeordnet sind.

14. Verfahren nach einem der Ansprüche 11-13, das ferner Folgendes umfasst:
Bestimmen durch eine Abhängigkeitsbeziehungs-Verarbeitungseinheit, ob ein aktueller Befehl für zyklische Vektorverschiebungsoperation eine Abhängigkeitsbeziehung mit einem Operationsbefehl, der teilweise ausgeführt worden ist, bevor durch die Einheit für zyklische Verschiebung der aktuelle Befehl für zyklische Vektorverschiebungsoperation erfasst worden ist, besitzt.

15. Verfahren nach einem der Ansprüche 11-14, das ferner Folgendes umfasst:
Speichern durch eine Befehls-Cache-Einheit eines auszuführenden Befehls für zyklische Vektorverschiebungsoperation, und
Speichern durch eine Eingabe/Ausgabe-Einheit (E/A-Einheit) in der Speichereinheit der Vektordaten, die dem Befehl für zyklische Vektorverschiebungsoperation zugeordnet sind, oder Erfassen durch die E/A-Einheit eines Operationsergebnisses des Befehls für zyklische Vektorverschiebungsoperation von der Speichereinheit.

16. Verfahren nach einem der Ansprüche 11-14, wobei der Befehl für zyklische Vektorverschiebungsoperation Folgendes umfasst:
einen Operationscode, der konfiguriert ist, die Ausführung der zyklischen Vektorverschiebungsoperation anzugeben; und
ein Operationsfeld, das eine direkte und/oder eine Registernummer enthält und konfiguriert ist, die skalaren Daten anzugeben, die dem Befehl für zyklische Vektorverschiebungsoperation zugeordnet sind;
wobei die Registernummer konfiguriert ist, auf eine Adresse der Registereinheit zu zeigen.

## Revendications

1. Appareil destiné à exécuter une opération de décalage cyclique vectoriel, comportant :
une unité de stockage, configurée pour stocker des données vectorielles associées à une instruction d'opération de décalage cyclique vectoriel ;
une unité de registre, configurée pour stocker des données scalaires associées à l'instruction d'opération de décalage cyclique vectoriel ;
une unité de commande, configurée pour décoder l'instruction d'opération de décalage cyclique vectoriel et pour commander un processus d'opération de l'instruction d'opération de décalage cyclique vectoriel ; et
une unité de décalage cyclique, configurée pour exécuter l'opération de décalage cyclique vectoriel sur des données vectorielles d'entrée selon l'instruction d'opération de décalage cyclique vectoriel décodée ;
l'unité de décalage cyclique étant mise en œuvre dans un circuit matériel particularisé ; et
les données scalaires stockées dans l'unité de registre comportant une adresse de début des données vectorielles d'entrée, une adresse de stockage de données vectorielles de sortie, une longueur des données vectorielles d'entrée et une taille de pas de décalage associée à l'instruction d'opération de décalage cyclique vectoriel ;
l'adresse de début des données vectorielles d'entrée et
l'adresse de stockage des données vectorielles de sortie étant des adresses dans l'unité de stockage.

2. Appareil selon la revendication 1, l'unité de décalage cyclique exécutant l'opération de décalage cyclique vectoriel sur le vecteur d'entrée et réinscrivant le résultat dans l'adresse de stockage des données vectorielles de sortie dans les données scalaires associées à l'instruction d'opération de décalage cyclique vectoriel.

3. Appareil selon la revendication 1, l'unité de commande comportant :
un module de file d'attente d'instructions, configuré pour stocker séquentiellement l'instruction d'opération de décalage cyclique vectoriel décodée et pour acquérir les données scalaires associées à l'instruction d'opération de décalage cyclique vectoriel.

4. Appareil selon la revendication 1, l'unité de commande comportant :
une unité de traitement de relations de dépendance, configurée pour déterminer si une instruction courante d'opération de décalage cyclique vectoriel présente une relation de dépendance avec une instruction d'opération qui a été partiellement exécutée, avant que l'unité de décalage cyclique acquière l'instruction courante d'opération de décalage cyclique vectoriel.

5. Appareil selon la revendication 1, l'unité de commande comportant :
un module de file d'attente de stockage, configuré pour stocker temporairement une instruction courante d'opération de décalage cyclique vectoriel lorsque l'instruction courante d'opération de décalage cyclique vectoriel présente une relation de dépendance avec une instruction d'opération qui a été partiellement exécutée, et pour envoyer l'instruction courante d'opération de décalage cyclique vectoriel stockées temporairement à l'unité de décalage cyclique lorsque la relation de dépendance est éliminée.

6. Appareil selon l'une quelconque des revendications 1 à 5, comportant en outre :
une unité de cache d'instructions, configurée pour stocker une instruction d'opération de décalage cyclique vectoriel à exécuter ; et
une unité d'entrée-sortie (E/S) configurée pour stocker dans l'unité de stockage les données vectorielles associées à l'instruction d'opération de décalage cyclique vectoriel ou pour acquérir un résultat d'opération de l'instruction d'opération de décalage cyclique vectoriel à partir de l'unité de stockage.

7. Appareil selon la revendication 1, l'instruction d'opération de décalage cyclique vectoriel comportant :
un code d'opération, configuré pour indiquer qu'il convient d'exécuter l'opération de décalage cyclique vectoriel ; et
un champ d'opération, comportant une donnée immédiate et/ou un numéro de registre et configuré pour indiquer les données scalaires associées à l'instruction d'opération de décalage cyclique vectoriel ;
le numéro de registre étant configuré pour pointer vers une adresse de l'unité de registre.

8. Appareil selon l'une quelconque des revendications 1 à 5, et 7, l'unité de stockage étant une mémoire bloc-notes.

9. Appareil selon la revendication 1, l'appareil comprenant en outre une unité d'entrée-sortie, E/S, l'unité d'E/S étant configurée pour stocker des données vectorielles dans l'unité de stockage, ou pour acquérir un résultat de l'opération vectorielle à partir de l'unité de stockage, l'unité d'E/S lisant des données vectorielles à partir d'une mémoire ou écrivant des données vectorielles dans la mémoire en accédant directement à l'unité de stockage.

10. Appareil selon la revendication 9, l'unité de stockage étant une mémoire bloc-notes.

11. Procédé d'exécution d'une opération de décalage cyclique vectoriel, le procédé comportant
le stockage, par une unité de stockage, de données vectorielles associées à une instruction d'opération de décalage cyclique vectoriel ;
le stockage, par une unité de registre, de données scalaires associées à l'instruction d'opération de décalage cyclique vectoriel ;
le décodage, par une unité de commande, de l'instruction d'opération de décalage cyclique vectoriel,
la commande, par l'unité de commande, d'un processus d'opération de l'instruction d'opération de décalage cyclique vectoriel ; et
l'exécution, par une unité de décalage cyclique mise en œuvre dans un circuit matériel particularisé, de l'opération de décalage cyclique vectoriel sur des données vectorielles d'entrée selon l'instruction d'opération de décalage cyclique vectoriel décodée ;
les données scalaires stockées dans l'unité de registre comportant une adresse de début des données vectorielles d'entrée, une adresse de stockage de données vectorielles de sortie, une longueur des données vectorielles d'entrée et une taille de pas de décalage associée à l'instruction d'opération de décalage cyclique vectoriel ;
l'adresse de début des données vectorielles d'entrée et l'adresse de stockage des données vectorielles de sortie étant des adresses dans l'unité de stockage.

12. Procédé selon la revendication 11, le procédé comportant en outre :
l'exécution, par l'unité de décalage cyclique, de l'opération de décalage cyclique vectoriel sur le vecteur d'entrée ; et
la réinscription, par l'unité de décalage cyclique, du résultat dans l'adresse de stockage de données vectorielles de sortie dans les données scalaires associées à l'instruction d'opération de décalage cyclique vectoriel.

13. Procédé selon l'une quelconque des revendications 11 à 12, comportant en outre
le stockage séquentiel, par un module de file d'attente d'instructions, de l'instruction d'opération de décalage cyclique vectoriel décodée ; et
l'acquisition, par le module de file d'attente d'instructions, des données scalaires associées à l'instruction d'opération de décalage cyclique vectoriel.

14. Procédé selon l'une quelconque des revendications 11 à 13, comportant en outre :
la détermination, par une unité de traitement de relations de dépendance, du fait qu'une instruction courante d'opération de décalage cyclique vectoriel présente ou non une relation de dépendance avec une instruction d'opération qui a été partiellement exécutée, avant l'acquisition, par l'unité de décalage cyclique, de l'instruction courante d'opération de décalage cyclique vectoriel.

15. Procédé selon l'une quelconque des revendications 11 à 14, comportant en outre :
le stockage, par une unité de cache d'instructions, d'une instruction d'opération de décalage cyclique vectoriel à exécuter, et
le stockage, par une unité d'entrée-sortie (E/S), dans l'unité de stockage, des données vectorielles associées à l'instruction d'opération de décalage cyclique vectoriel ou l'acquisition, par l'unité d'E/S, d'un résultat d'opération de l'instruction d'opération de décalage cyclique vectoriel à partir de l'unité de stockage.

16. Procédé selon l'une quelconque des revendications 11 à 14, l'instruction d'opération de décalage cyclique vectoriel comportant :
un code d'opération, configuré pour indiquer qu'il convient d'exécuter l'opération de décalage cyclique vectoriel ; et
un champ d'opération, comportant une donnée immédiate et/ou un numéro de registre et configuré pour indiquer les données scalaires associées à l'instruction d'opération de décalage cyclique vectoriel ;
le numéro de registre étant configuré pour pointer vers une adresse de l'unité de registre.
